# EUROPEAN PATENT APPLICATION

(11) **EP 4 258 044 A1**
(43) Date of publication of application: **11.10.2023**
(21) Application number: 21903019.4
(22) Date of filing: 19.10.2021
(51) Int. Cl.: G02C 13/00, B24B 9/14, B24B 49/02, G02C 7/10

(54) **SPECTACLE LENS PROCESSING METHOD AND SPECTACLE LENS PROCESSING PROGRAM**

(30) Priority: 07.12.2020 JP 2020202672
(71) Applicant: Hoya Lens Thailand Ltd., Pathumthani 12130 (TH)
(72) Inventor: YOKOYAMA, Shinichi, Tokyo 160-8347 (JP)
(74) Representative: Hoffmann Eitle
(86) International application number: PCT/JP2021/038553
(87) International publication number: WO 2022/123915

(57) **Abstract**

In a method of processing a spectacle lens (11, 40) that has an electronic element (22, 42) overlapping an optical element (21, 41) and supplies electric energy to the electronic element through a terminal portion (23) located on a surface (21a, 41b) on one side in a front-back direction to produce a dimming effect, the method including: acquiring inner dimension information of a retaining portion (17, 45) of a frame (12), the retaining portion sandwiching and retaining a periphery of the spectacle lens between a front and a rear; acquiring thickness information of the periphery of the spectacle lens processed into an external shape corresponding to the frame; determining an interference area (Q, Q1, Q2) of the periphery of the spectacle lens that does not fit into the retaining portion on the basis of the inner dimension information of the retaining portion and the thickness information of the periphery of the spectacle lens; and performing thickness adjustment processing for removing the interference area, on a surface (21b, 41a) on the other side of the spectacle lens opposite to the surface on the one side of the spectacle lens. This configuration enables easy assembly of a spectacle lens to a frame without being restricted by the thickness of a lens periphery.

## Description

### [Technical Field]

The present invention relates to a spectacle lens processing method and a spectacle lens processing program.

### [Background Art]

In the manufacture and provision of spectacles, spectacle lenses are machined into a contour shape corresponding to the frame (ball-shaping processing) and assembled to the frame. In the ball-shaping processing, techniques have been proposed for processing the periphery of spectacle lenses with high precision and efficiency (e.g., PTL 1) .

In addition, there have been known electronic dimming spectacles that are provided with electronic elements on the surface or inside of spectacle lenses and change optical characteristics (light transmittance, color, etc.) by changing the state of the electronic elements (e.g., PTL 2). Examples of the electronic elements used in the electronic dimming spectacles include electrochromic elements (EC elements) and the like.

In this type of electronic dimming spectacles, when a spectacle lens is assembled to a frame, a conductive member on the frame side comes into contact with an electrode of the electronic element on the lens side, enabling the supply of electric energy to the electronic element. For example, the terminal for the electrode of the electronic element is placed on either the front or rear side of the periphery of the spectacle lens that is covered by the frame, and the lens periphery is sandwiched between the front and the rear by a retaining portion of the frame to retain the lens and make an electrical connection to the electrode. Because of these conditions, electronic dimming spectacles may use frames with a structure different from that of ordinary spectacles.

### [Citation List]

### [Patent Literature]

[PTL 1] Japanese Patent Application Publication No. 2001-47348
[PTL 2] Japanese Patent No. 6624206

### [Summary of Invention]

### [Technical Problem]

Normally, for concave meniscus lenses for spectacles, the longer the distance from the eye point to the lens periphery, the thicker the edge thickness becomes, and for convex meniscus lenses, the longer the distance from the eye point to the lens periphery, the thinner the edge thickness becomes. Therefore, for lenses that are ball-shaped into an external shape corresponding to a non-circular frame, the edge thickness of the lens periphery is not constant. In general spectacles in which the rim of the lens outer periphery is held by the frame, the lens assembly to the frame is less restricted by the edge thickness, and in many cases there is no problem even if the lens periphery partially protrudes in the front-back direction relative to the rim of the frame.

On the other hand, in the case of electronic dimming spectacles that use a frame that sandwiches and retains the lens peripheries between the front and the rear as described above, variations in the edge thickness of the lenses have a significant impact on the frame's ability to retain and assemble the lenses. In particular, in the area of the lens periphery where the edge thickness exceeds the maximum thickness that can be retained by the retaining portion of the frame, the lens is restricted from being inserted into the frame, and this must be addressed.

In order to solve the foregoing problems, an object of the present invention is to provide a spectacle lens processing method and a spectacle lens processing program to enable easy assembly of spectacle lenses into a frame without being restricted by the thickness of lens peripheries.

### [Solution to Problem]

The present invention is a method of processing a spectacle lens that has an electronic element overlapping an optical element and supplies electric energy to the electronic element through a terminal portion located on a surface on one side in a front-back direction to produce a dimming effect, the method including: acquiring inner dimension information of a retaining portion of a frame, the retaining portion sandwiching and retaining a periphery of the spectacle lens between a front and a rear; acquiring thickness information of the periphery of the spectacle lens processed into an external shape corresponding to the frame; determining an interference area of the periphery of the spectacle lens that does not fit into the retaining portion on the basis of the inner dimension information of the retaining portion and the thickness information of the periphery of the spectacle lens; and performing thickness adjustment processing for removing the interference area, on a surface on the other side of the spectacle lens opposite to the surface on the one side of the spectacle lens.

It is preferred that the surface on the one side of the spectacle lens where the terminal portion is located be a convex surface and the surface on the other side where the thickness adjustment processing is performed be a concave surface.

In the thickness adjustment processing, it is preferred that only a part of the spectacle lens in a radial direction that overlaps the retaining portion be removed. In other words, it is preferred that the shape of the other side of the spectacle lens be maintained in an area on an inner diameter side from the retaining portion.

The present invention is also a program for processing a spectacle lens that has an electronic element overlapping an optical element and supplies electric energy to the electronic element through a terminal portion located on a surface on one side in a front-back direction to produce a dimming effect, the program causing a control unit for controlling the processing of the spectacle lens to: acquire inner dimension information of a retaining portion of a frame, the retaining portion sandwiching and retaining a periphery of a spectacle lens between a front and a rear; acquire thickness information of the periphery of the spectacle lens processed into an external shape corresponding to the frame; determine an interference area of the periphery of the spectacle lens that does not fit into the retaining portion on the basis of the inner dimension information of the retaining portion and the thickness information of the periphery of the spectacle lens; and perform thickness adjustment processing for removing the interference area, on a surface on the other side of the spectacle lens opposite to the surface on the one side of the spectacle lens.

### [Advantageous Effects of Invention]

According to the present invention, it is possible to easily assemble a spectacle lens to a frame having a retaining portion for sandwiching and retaining a periphery of the spectacle lens between the front and the rear without being restricted by the thickness of the periphery of the lens.

### [Brief Description of Drawings]

[Fig. 1]

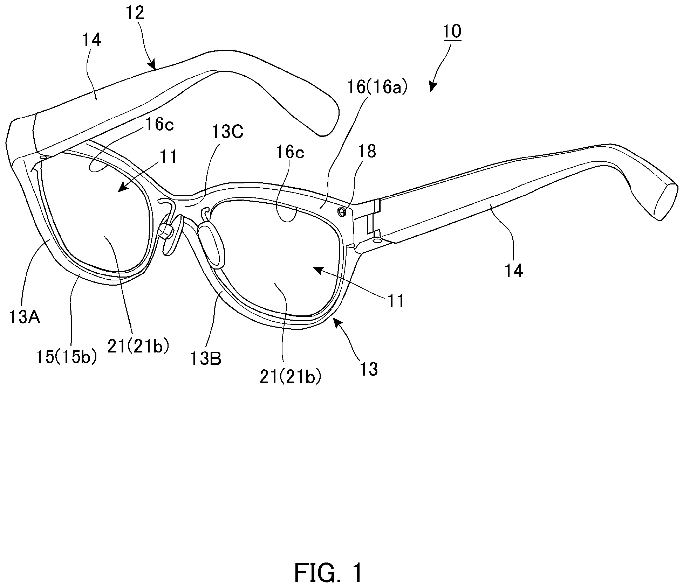

   Fig. 1 is a perspective view showing an electronic dimming spectacle from behind.
[Fig. 2]

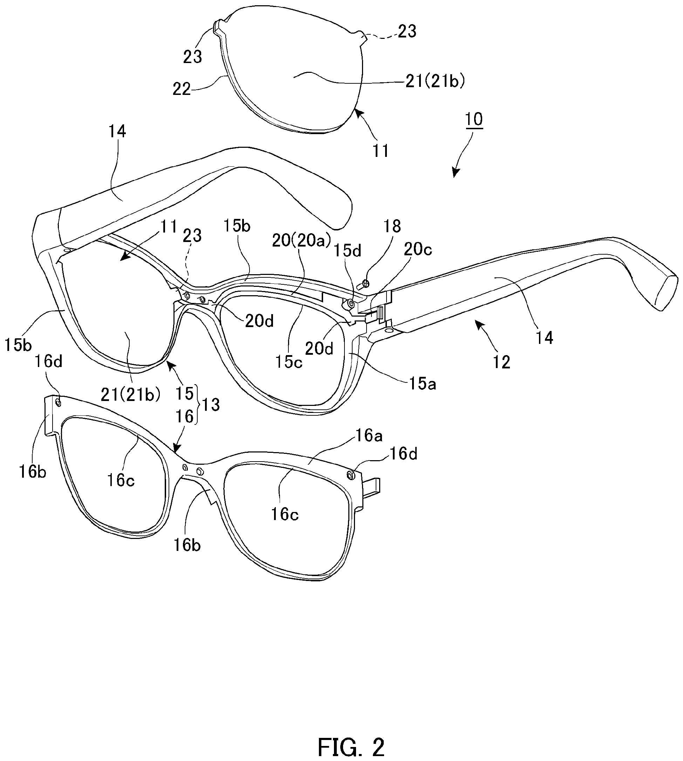

   Fig. 2 is a perspective view of the electronic dimming spectacle in a state where a rear rim part constituting a frame is removed.
[Fig. 3]

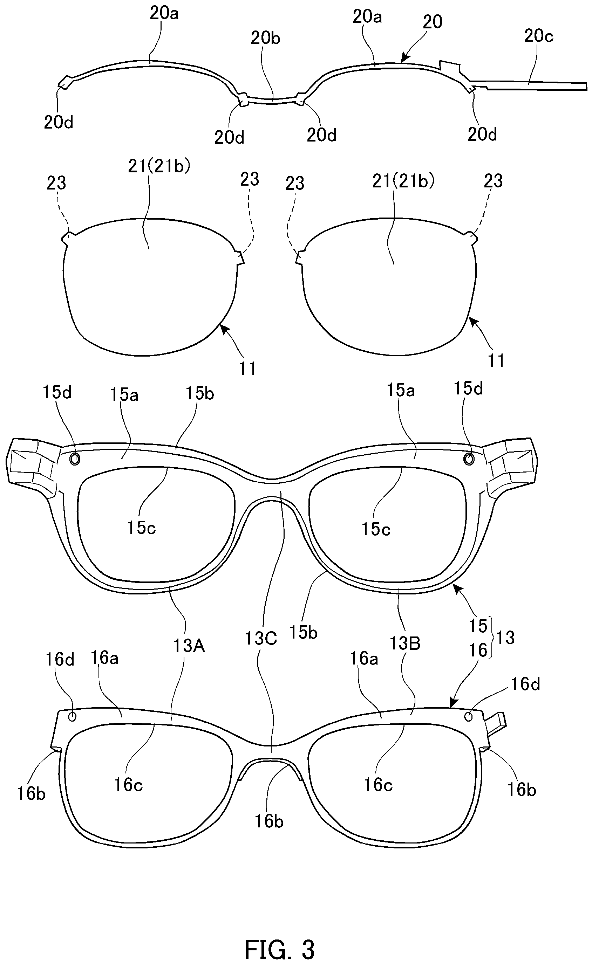

   Fig. 3 is a rear view of the electronic dimming spectacle in a disassembled state.
[Fig. 4]

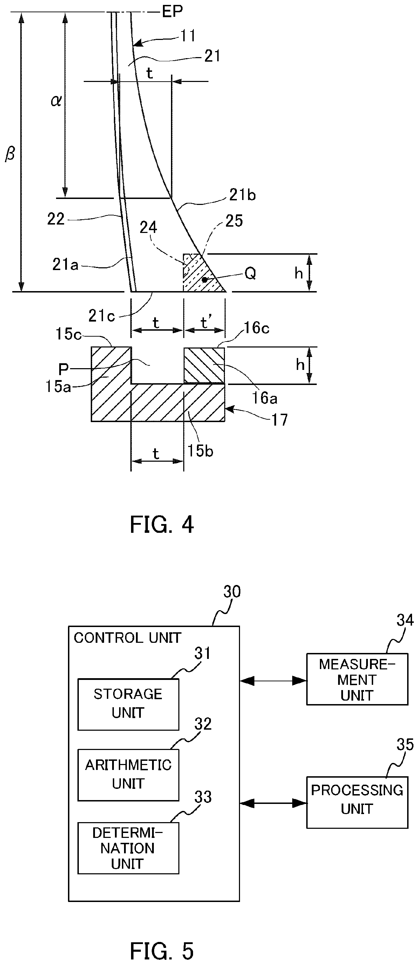

   Fig. 4 is a diagram for explaining thickness adjustment processing for a dimming lens constituting the electronic dimming spectacle.
[Fig. 5]
   Fig. 5 is a diagram showing a functional block for control related to processing of the dimming lens.
[Fig. 6]

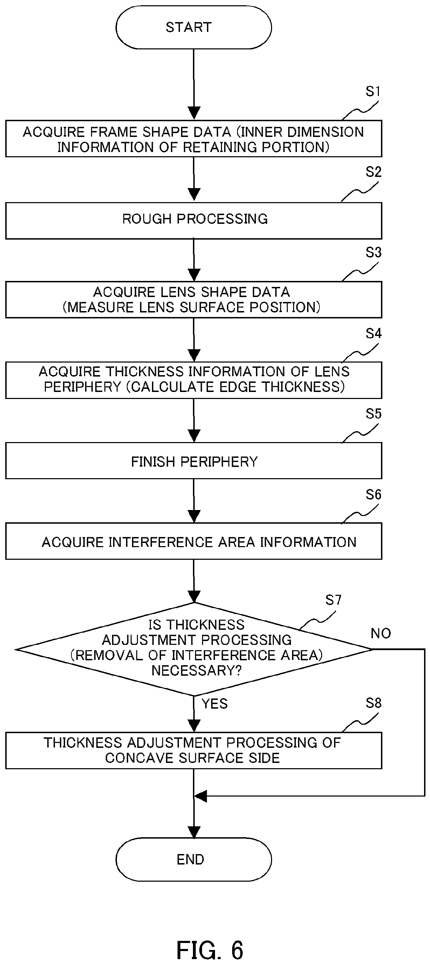

   Fig. 6 is a flowchart showing a method for processing the dimming lens.
[Fig. 7]

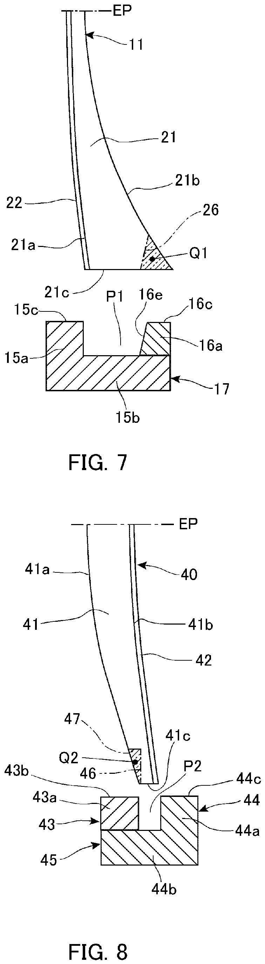

   Fig. 7 is a diagram showing a modification of the thickness adjustment processing for the dimming lens.
[Fig. 8]
   Fig. 8 is a diagram showing a modification of the thickness adjustment processing for the dimming lens.

### [Description of Embodiments]

An electronic dimming spectacle 10 shown in Fig. 1 includes a spectacle lens processed (manufactured) by applying the present invention. The spectacle lens is an electronic dimming lens that combines a lens, which is an optical element, with an electronic element for dimming, and is referred to as a dimming lens 11 in the following description. A pair of left and right dimming lenses 11 are assembled on a frame 12 to configure electronic dimming spectacles 10.

The electronic dimming spectacles 10 are provided with a dimming control unit, power supply, and a dimming operation unit, which are omitted from the drawing. When a user operates the dimming operation unit, the dimming control unit controls the energizing of the electronic elements of the dimming lenses 11, to produce a dimming effect of the dimming lenses 11. The dimming control unit may change the dimming effect (light transmittance) of the dimming lenses 11 in a plurality of steps according to the operation of the dimming operation unit.

The frame 12 includes a rim assembly 13 that retains the pair of left and right dimming lenses 11, and a pair of temples 14 that are connected to the rim assembly 13. The rim assembly 13 has a configuration in which a left rim portion 13A that retains the dimming lens 11 for the left eye and a right rim portion 13B that retains the dimming lens 11 for the right eye are connected by a bridge 13C in the center. The left rim portion 13A and the right rim portion 13B are each configured to circularly surround the periphery of an opening that exposes the dimming lens 11, and this circular portion (retaining portion 17 described below) retains the peripheries of the dimming lenses 11. The retaining structure of the dimming lens 11 by the rim assembly 13 is described below. The temples 14 are connected to the left rim portion 13A and the right rim portion 13B, respectively, near left and right ends opposite to the bridge 13C. The connection between the temples 14 has a hinge structure, allowing each temple 14 to fold against the rim assembly 13.

As shown in Figs. 2 and 3, the rim assembly 13 is composed of two members, a front rim part 15 and a rear rim part 16, which are divided in the front-back direction. The front rim part 15 is located on the front side and the rear rim part 16 is located on the rear side, and the peripheries of the dimming lenses 11 are sandwiched and held between the front rim part 15 and the rear rim part 16 in the front-back direction.

The front rim part 15 has a front wall portion 15a constituting a front surface portion of the rim assembly 13 and a peripheral wall 15b protruding rearward from a periphery of the front wall portion 15a. The peripheral wall 15b is provided over the roughly entire periphery in the front rim part 15.

The rear rim part 16 has a rear wall portion 16a constituting a rear surface portion of the rim assembly 13 and a protrusion 16b protruding forward from the rear wall portion 16a. The protrusion 16b is provided only near the left end of the left rim portion 13A, near the right end of the right rim portion 13B, and near the bridge 13C in the rear rim part 16.

A front end of the protrusion 16b comes into abutment with a rear surface of the front wall portion 15a to define the relative positional relationship between the front rim part 15 and the rear rim part 16 in the front-back direction. In other words, the protrusion 16b functions as a spacer to determine a front-back distance between the front wall portion 15a of the front rim part 15 and the rear wall portion 16a of the rear rim part 16. The rear wall portion 16a has an external shape that fits inside the peripheral wall 15b, and the peripheral wall 15b surrounds the outside of the rear wall portion 16a, thereby defining the relative positional relationship between the front rim part 15 and rear rim part 16 in the vertical direction and the horizontal direction.

The front rim part 15 and the rear rim part 16 each have a pair of left and right openings for exposing the dimming lenses 11. The front wall portion 15a and the rear wall portion 16a have inner edge portions 15c and inner edge portions 16c that surround these openings (see Fig. 3).

As shown in Fig. 4, with the front rim part 15 and rear rim part 16 combined, the front wall portion 15a and the rear wall portion 16a face each other with a predetermined distance in the front-back direction, and the front wall portion 15a, the peripheral wall 15b, and the rear wall portion 16a configure the retaining portion 17. The space enclosed on three sides by the retaining portion 17 having a concave cross section is a lens retaining space P. The lens retaining space P is an annular groove portion (inner peripheral groove) opening toward the inner periphery of the left rim portion 13A and the right rim portion 13B. The lens retaining space P of the left rim portion 13A and the lens retaining space P of the right rim portion 13B are connected at the bridge 13C, through which a conductive member 20 described below is arranged (see Fig. 2).

The front rim part 15 and the rear rim part 16 are formed as separate parts and are fixed to each other in the process of manufacturing the electronic dimming spectacles 10, to obtain the rim assembly 13. As a means of fixing the front rim part 15 and rear rim part 16, screws 18 (Figs. 1 and 2) are used in the present embodiment. As shown in Figs. 2 and 3, the front rim part 15 has screw portions 15d to which the screws 18 are screwed, and the rear rim part 16 has through holes 16d formed in positions corresponding to the screw portions 15d. The front rim part 15 and the rear rim part 16 are secured to each other by inserting the screws 18 into the through holes 16d from the rear, screwing the screws 18 into the screw portions 15d, and applying a predetermined tightening torque. In the present embodiment, the left rim portion 13A and the right rim portion 13B are fastened and fixed with the screws 18 near the connection position of the temples 14, but the screw fastening position is not limited thereto. A fixing means other than screws (such as adhesives) can also be used in fixing the front rim part 15 and the rear rim part 16.

The conductive member 20 (see Figs. 2 and 3) is arranged inside the rim assembly 13. In addition, although not shown, a power supply and a dimming control unit are provided inside one of the pair of temples 14 (the right side temple 14, in the present embodiment). The conductive member 20 electrically connects the electrodes on the dimming lenses 11 side (details to be described later) to the power supply inside the temple 14. The conductive member 20 is a flexible sheet-like material, specifically composed of a flexible printed circuit board or the like. As shown in Fig. 2, the conductive member 20 is attached to the rear side of the front wall portion 15a. The conductive member 20 is fixed to the front rim part 15 by means of double-sided tape, adhesive, or the like.

In the frame 12 of the electronic dimming spectacles 10, the temples 14 and the bridge 13C are connected to the left rim portion 13A and the right rim portion 13B at positions closer to the upper edge. In accordance with such a frame shape, the conductive member 20 has an elongated shape extending in the horizontal direction along the upper edge portion of the rim assembly 13. More particularly, as shown in Fig. 3, the conductive member 20 connects a pair of left and right mountain-shaped portions 20a that are shaped along the upper edges of the left rim portion 13A and the right rim portion 13B respectively, by a connection portion 20b shaped along the bridge 13C. An extension portion 20c extending from the right-side mountain-shaped portion 20a is connected to the power supply and the dimming control unit in the temple 14. The conductive member 20 has a total of four connector portions 20d, one near each end of each of the mountain-shaped portions 20a. Each connector portion 20d has an exposed conductive terminal.

As shown in Fig. 4 in cross-sectional view, the dimming lenses 11 are each composed of an electrochromic element (EC element) 22, an electronic element for dimming, superimposed on the front side of a lens 21 which is a resin optical element. The lens 21 is a concave meniscus lens with a convex surface 21a on the front side and a concave surface 21b on the rear side, and the sheet-shaped electrochromic element 22 is curved along the convex surface 21a of the lens 21. Although not shown in Fig. 4, a coating layer having a predetermined function (anti-reflection effect, controlling transmission of ultraviolet and infrared rays, lens protection effect, etc.) may be formed on the surface side of the electrochromic element 22. The outer periphery of the lens 21 has an edge surface 21c that connects the convex surface 21a and the concave surface 21b.

In manufacturing the lens 21, with the convex surface 21a and the concave surface 21b, the periphery is processed (ball-shaped) into an external shape that corresponds to the rim assembly 13 (the left rim portion 13A and the right rim portion 13B) of the frame 12.

As a method for manufacturing the dimming lenses 11, for example, it is possible to manufacture the lens 21 and the electrochromic element 22 separately, preform the electrochromic element 22 into a curved shape corresponding to the convex surface 21a of the lens 21, and then attach the electrochromic element 22 and the lens 21. Alternatively, during the process of molding the lens 21, the electrochromic element 22 can be included and molded integrally, to obtain the dimming lenses 11.

Although specific illustrations are omitted, the electrochromic element 22 is configured by layering a first electrode layer, an electrochromic layer (dimming layer), and a second electrode layer on a substrate such as resin. The electrochromic layer contains an electrochromic material that reversibly changes the optical properties through a redox reaction caused by the application of voltage.

The first electrode layer and the second electrode layer of the electrochromic element 22 are each a transparent conductive film made of transparent and conductive material. On the front side of the periphery of each dimming lens 11, two terminal portions 23 are provided, one for the positive electrode and the other for the negative electrode, with a part of the first electrode layer configuring one of the terminal portions 23 and a part of the second electrode layer configuring the other terminal portion 23.

The electrochromic layer of the electrochromic element 22 is transparent (highest transmittance of visible light) in the normal state when no voltage is applied, and is colored in a predetermined color corresponding to the electrochromic material by the application of voltage, to reduce the light transmittance.

The dimming lenses 11 configured as described above are assembled to the rim assembly 13. As shown in Fig. 2, the dimming lenses 11 are assembled, with the front rim part 15 and the rear rim part 16 separated. The front rim part 15 has the conductive member 20 attached in advance. When the dimming lens 11 is assembled to the front rim part 15 from the rear, the front surface (convex surface 21a side) of the periphery of the dimming lens 11 comes into contact with the front wall portion 15a. Then, when the rear rim part 16 is assembled from behind against the front rim part 15 and secured with the screws 18, the rear surface (concave surface 21b side) of the periphery of the dimming lens 11 comes into contact with the rear wall portion 16a. At this stage, the periphery of the dimming lens 11 is fitted into the lens retaining space P of the rim assembly 13, and the position of the dimming lens 11 in the front-back direction is determined by being sandwiched between the front and the rear by the front wall portion 15a and the rear wall portion 16a. In addition, the edge surface 21c is positioned against the peripheral wall 15b, and the position of the dimming lens 11 in the height direction and the horizontal direction is determined. In addition to the sandwiching of the dimming lens 11 by the front rim part 15 and the rear rim part 16, the dimming lens 11 may be further fixed to the rim assembly 13 with an adhesive or the like.

When the left and right dimming lenses 11 are assembled to the rim assembly 13, the terminal portion 23 arranged on the front side of each dimming lens 11 comes into contact with the connector portion 20d of the conductive member 20 in a conductive state. This enables the supply of electrical energy from the power supply in the temple 14 to the electrochromic element 22 via the conductive member 20. Contact points of the conductive member 20 and the terminal portions 23 are covered by the front wall portion 15a and the rear wall portion 16a in the rim assembly 13 and are not exposed on the exterior of the electronic dimming spectacles 10.

Since the structure is such that the terminal portions 23 are brought into contact with the connector portion 20d of the conductive member 20 that is arranged on the rear side of the front wall portion 15a from behind and further pressed and retained by the rear wall portion 16a from behind, the assembly of the dimming lens 11 including the terminal portion 23 can be easily performed, and the connector portion 20d and the terminal portion 23 can be brought into contact stably and with high accuracy.

For example, unlike the present embodiment, in an integral structure in which the front rim part 15 and the rear rim part 16 cannot be separated, the periphery of the dimming lens 11 interferes with the front wall portion 15a and the rear wall portion 16a, making the assembly of the dimming lens 11 to the rim assembly 13 itself difficult. Even if the assembly is possible, since the periphery of the dimming lens 11 is inserted into the lens retaining space P while sliding the dimming lens 11 toward the bottom of the retaining portion 17 (peripheral wall 15b), the connector portion 20d and the terminal portion 23 may interfere with each other and not be inserted smoothly.

Incidentally, the dimming lens 11 is a concave meniscus lens, and the longer the distance from the eye point EP (Fig. 4) to the lens periphery, the thicker the edge thickness (length of the edge surface 21c in the front-back direction), and conversely, the shorter the distance from the eye point EP to the lens periphery, the thinner the edge thickness. For example, as shown in Fig. 4, if two positions are set with a relationship of α < β in terms of distance from the eye point EP, an edge thickness t + t' is at a distance β, compared to an edge thickness t at a distance α. As shown in Fig. 3, the left rim portion 13A and the right rim portion 13B in the rim assembly 13 are non-circular in the front view (rear view). Thus, in a state where only the general ball-shaping processing to match the lens external shape to the frame is performed, such variations in the edge thickness occur at the periphery of the dimming lens 11. Since the present embodiment covers the dimming lens 11 having a dimming mechanism, the thickness of the dimming lens 11 is a combination of the thickness of the lens 21 and the thickness of the electrochromic element 22.

Since the frame 12 (rim assembly 13) in the electronic dimming spectacles 10 is structured to retain the periphery of the dimming lens 11 between the front and the rear, it is necessary to properly manage the edge thickness of the dimming lens 11. In particular, if the thickness of the dimming lens 11 in the front-back direction exceeds the distance between the front wall portion 15a and the rear wall portion 16a (inner dimension of the retaining portion 17), the dimming lens 11 cannot be placed in the lens retaining space P. In other words, the inner dimension of the retaining portion 17 in the front-back direction from the front wall portion 15a to the rear wall portion 16a is the maximum thickness that can be retained by the frame 12 (rim assembly 13). For example, in the example shown in Fig. 4, the aforementioned edge thickness t is the maximum thickness that can be retained by the retaining portion 17, and the part of the periphery of the dimming lens 11 where the edge thickness exceeds the maximum thickness is an interference area Q that does not fit into the lens retaining space P.

In the dimming lens 11, since the terminal portion 23 that connects to the conductive member 20 is provided on the front side, the positional reference of the part that fits into the lens retaining space P in the front-back direction is managed on the front side. The part behind the part with the maximum thickness (t), which is set based on the front side, becomes an excess thickness t' that does not fit into the lens retaining space P. The possible interference with the rear rim part 16 is in a superimposed range h, which overlaps the rear wall portion 16a in the radial direction centered at the eye point EP. Therefore, the part closer to the rear of the outer edge included in the excess thickness t' in the superimposed range h is the interference area Q. This interference area Q includes a part of the concave surface 21b.

For the frame 12 (rim assembly 13) having the above-mentioned restrictions on the assembly of the dimming lens 11, the processing of adjusting the shape of the dimming lens 11 (thickness adjustment processing) is performed in order to achieve easy and secure assembly of the dimming lens 11.

Fig. 5 shows an example of a functional block for performing control related to the shape processing for the dimming lens 11. A processing device (cutting device, grinding device, etc.) that processes the dimming lens 11 may be equipped with the entire functional block, or an external terminal (computer) that is installed separately from the processing device and sends instructions to the processing device may be equipped with part of the functional block.

The functional block for control has a control unit 30 that controls the overall processing of the dimming lens 11. The control unit 30 includes a storage unit 31, an arithmetic unit 32, and a determination unit 33. The storage unit 31 is composed of a storage means such as a ROM (Read Only Memory) and a RAM (Random Access Memory). The arithmetic unit 32 and the determination unit 33 are implemented as functions of a processor such as a CPU (Central Processing Unit).

A measurement unit 34 includes a measurement means for measuring the surface shape of the dimming lens 11 and the dimensions of each part. A processing unit 35 includes a retaining means for retaining the dimming lens 11 and a cutting means or a grinding means for processing the dimming lens 11 retained by the retaining means.

A processing program for processing according to the present embodiment is stored in the storage unit 31, and the control unit 30 reads and executes the processing program. In other words, the processing program causes the control unit 30 to perform the processing in each of the steps described below.

The flowchart in Fig. 6 shows the step of processing the dimming lens 11 (lens 21), in particular, the step of ball-shaping processing to enable the assembly of the dimming lens 11 to the frame 12. As a preliminary step in the ball-shaping processing, the convex surface 21a and the concave surface 21b have already been formed in the lens 21.

The processing details shown in the flowchart in Fig. 6 can be applied to both the state obtained after the electrochromic element 22 is attached to the surface of lens 21 and the state of the lens 21 alone before the electrochromic element 22 is attached thereto. In other words, the object of measurement by the measurement unit 34 and processing by the processing unit 35 can be either the lens 21 alone or the combination of the lens 21 and the electrochromic element 22. When applied to the state of the lens 21 alone, the thickness information of the dimming lens 11 can be acquired by adding the thickness of the electrochromic element 22 in the design to the thickness of the lens 21 actually measured by the measurement unit 34.

In step S1, frame shape data (three-dimensional data) including the shape and various dimensions related to the frame 12 is stored in the storage unit 31 of the control unit 30. With the frame shape data, it is possible to acquire information on the inner dimensions of the retaining portion 17, such as the maximum thickness of the lens retaining space P (the maximum edge thickness t that can be retained) and the depth in the radial direction (superimposed range h) described above.

Rough processing of the dimming lens 11 is performed in step S2. In the rough processing, the control unit 30 controls the processing unit 35 based on the frame shape data input to the storage unit 31, to process the outer peripheral shape of the dimming lens 11 based on contours along the left rim portion 13A and the right rim portion 13B.

In step S3, the control unit 30 controls the measurement unit 34 to obtain lens shape data. Specifically, the front and rear surface positions of the dimming lens 11 are measured. For example, the measurement unit 34 can measure the lens surface position by tracing the lens surface of the dimming lens 11 with a stylus and detecting a displacement of the stylus in the lens thickness direction.

In step S4, the arithmetic unit 32 of the control unit 30 calculates the edge thickness of the periphery of the dimming lens 11 based on the lens shape data obtained in step S3. The calculation of the edge thickness is performed over the entire circumference of the dimming lens 11, and the calculation results are stored in the storage unit 31 as the thickness information of the lens periphery.

It is also possible to obtain the lens shape data from the design values of the dimming lens 11 (lens 21) without performing the measurement in step S3. However, by performing the actual measurement in step S3 as in the present embodiment, the effect of manufacturing errors on the design values can be eliminated, and the accuracy of the thickness information of the lens periphery acquired in step S4 can be improved.

In step S5, based on the frame shape data and the lens shape data described above, the periphery of the dimming lens 11, in particular the edge surface 21c, which is the contour, is finished. At this stage, the outer peripheral shape of the dimming lens 11 is determined, and the processing then proceeds to thickness adjustment.

In step S6, the arithmetic unit 32 and the determination unit 33 of the control unit 30 compare and calculate the inner dimension information of the retaining portion 17 of the frame 12 acquired earlier and the thickness information of the periphery of the dimming lens 11, to acquire information on the interference area Q of the periphery of the dimming lens 11 that does not fit into the lens retaining space P of the retaining portion 17. Specifically, the presence/absence of the interference area Q is determined, and if the interference area Q exists, the position thereof is identified, and the data thereof is stored in the storage unit 31. The processing of step S6 may be performed between step S4 and step S5 or simultaneously with the processing of step S5.

In step S7, the determination unit 33 determines whether or not to perform the thickness adjustment processing for removing the interference area Q based on the information acquired in step S6. In a case where the interference area Q does not exist (step S7: NO), the dimming lens 11 is already ready to be assembled to the frame 12 and the ball-shaping processing is completed.

If the interference area Q exists (step S7: YES), the processing proceeds to step S8. In step S8, the control unit 30 controls the processing unit 35 to perform the thickness adjustment processing for removing the interference area Q, on the concave surface 21b of the dimming lens 11. Once the processing in step S8 is completed, the dimming lens 11 is ready to be assembled to the frame 12, completing the ball-shaping processing.

As shown in Fig. 4, according to the present embodiment, in the thickness adjustment processing of step S8, the periphery of the dimming lens 11 is processed to have steps including a first surface 24 facing rearward and a second surface 25 facing outward. The first surface 24 is a plane perpendicular to the front-back direction (optical axis of the dimming lens 11), and an outer periphery of the first surface 24 is connected to the edge surface 21c. The second surface 25 is a surface extending rearward from an inner periphery of the first surface 24 and is curved along the inner edge portion 16c of the rear wall portion 16a of the rear rim part 16. In other words, the second surface 25 is shaped to fit the inner edge portion 16c in the completed state of the electronic dimming spectacles 10.

The first surface 24 is formed as a surface that comes into contact with the front surface of the rear wall portion 16a of the rear rim part 16 when the periphery of the dimming lens 11 is retained by the retaining portion 17. In terms of not allowing the interference area Q to interfere with the retaining portion 17, it is possible to remove the lens periphery up to a position forward of the first surface 24 (i.e., more in the front-back direction than in the present embodiment). However, as in the present embodiment, the time and cost required for processing such as cutting can be saved by forming the first surface 24 by keeping the amount to be removed toward the front minimum. In addition, by forming the first surface 24 in such a manner that it comes into contact with the rear wall portion 16a, the positioning effect in the front-back direction by the first surface 24 can be obtained, which contributes to improving the stability and positioning accuracy of the dimming lens 11 assembled to the frame 12.

In the present embodiment, the first surface 24 is in a flat shape facing rearward. Such first surface 24 has the advantage of having a simple shape and easy to be processed, but a different shape can also be adopted. For example, a protrusion protruding rearward from the first surface 24 may be partially provided in such a manner that the protrusion comes into contact with the rear wall portion 16a.

From the viewpoint of not allowing the interference area Q to interfere with the retaining portion 17, it is also possible to stretch the first surface 24 toward the inner diameter and connect the first surface 24 to the concave surface 21b without providing the second surface 25 when performing the thickness adjustment processing on the lens periphery. However, in this processing, when the dimming lens 11 is mounted on the frame 12, the first surface 24 (flat surface obtained by stretching the first surface 24 toward the inner diameter) is exposed around the concave surface 21b, which may adversely affect the optical performance and appearance. Therefore, it is preferred that only the part of the dimming lens 11 in the radial direction that overlaps with the retaining portion 17 (superimposed range h) be removed by performing processing to include the second surface 25 along the inner edge portion 16c of the rear wall portion 16a, as in the present embodiment, and that the concave surface 21b be left in the part not overlapping with the retaining portion 17.

As described above, according to the processing method and the processing program according to the present embodiment, it is possible to easily assemble the dimming lens 11 to the frame 12 having the retaining portion 17 that sandwiches and retains the periphery of the dimming lens 11 between the front and the rear, without being restricted by the thickness of the lens periphery. In particular, in the dimming lens 11 equipped with the terminal portion 23 on one side (convex surface 21a side), the interference area Q with the retaining portion 17 is removed by the processing on the opposite side (concave surface 21b side), enabling efficient lens thickness adjustment with a high degree of freedom without affecting the structure of supplying power to the electrochromic element 22, which is the electronic element for dimming.

Fig. 7 shows a modification of the thickness adjustment processing for the dimming lens 11. In this modification, an inclined surface 16e is formed on the front side of the rear wall portion 16a of the rear rim part 16, as a configuration of the retaining portion 17 of the frame 12. The inclined surface 16e has an inclined shape that approaches the eye point EP from the front to the rear, and the shape of the lens retaining space P1 is different from the shape of the lens retaining space P shown in Fig. 4 described above. In step S1 of the flow chart in Fig. 6, the inner dimension information of the retaining portion 17 that includes the inclined shape of the inclined surface 16e is obtained.

In step S6 of the flowchart, information on the interference area Q1 of the periphery of the dimming lens 11 that does not fit into the lens retaining space P1 of the retaining portion 17 is obtained based on the inner dimension information of the retaining portion 17 of the frame 12 and the thickness information of the periphery of the dimming lens 11.

As a result of removing the interference area Q1 by the thickness adjustment processing of step S8, an inclined surface 26 is formed on the periphery of the dimming lens 11. The inclined surface 26 is one continuous surface from the concave surface 21b to the edge surface 21c, and has an inclined shape that approaches the eye point EP from the convex surface 21a side (forward) to the concave surface 21b side (rearward). This inclined surface 26 is shaped to fit the inclined surface 16e of the rear rim part 16 in the completed state of the electronic dimming spectacles 10.

Thus, in the thickness adjustment processing, one continuous inclined surface 26 may be formed from the concave surface 21b to the edge surface 21c without dividing it into surfaces such as the first surface 24 and the second surface 25. If the boundary position between the edge surface 21c and the inclined surface 26 is at the same front-back position as the boundary position between the edge surface 21c and the first surface 24 shown in Fig. 4, the amount of the interference area Q1 to be removed (Fig. 7) along the inclined surface 26 is smaller than the amount of the interference area Q to be removed (Fig. 4) along the first surface 24 and the second surface 25.

Although the dimming lens 11 of the foregoing embodiment is a concave meniscus lens, it can also be applied to a convex meniscus lens. Fig. 8 shows a modification applied to the thickness adjustment processing for a dimming lens 40, which is a convex meniscus lens.

The dimming lens 40 is composed of an electrochromic element 42, which is an electronic element for dimming, superimposed on the rear side of a lens 41, which is an optical element made of resin. The lens 41 is a convex meniscus lens with a convex surface 41a on the front side and a concave surface 41b on the rear side, and an edge surface 41c connecting the convex surface 41a and the concave surface 41b is formed on the outer periphery of the lens 41. The edge surface 41c is a surface extending in the front-back direction.

The sheet-shaped electrochromic element 42 is curved along the concave surface 41b of the lens 41. Two terminal portions for positive and negative electrodes (not shown), which connect to a first electrode layer and a second electrode layer of the electrochromic element 42, are located on the rear side of the periphery of the dimming lens 40. These terminal portions have the same role as the terminal portion 23 of the embodiment described above.

The dimming lens 40 is retained in a retaining portion 45 provided on a front rim part 43 and a rear rim part 44 of an spectacle frame. The front rim part 43 has a front wall portion 43a. The rear rim part 44 has a rear wall portion 44a located behind the front wall portion 43a, and a peripheral wall 44b protruding forward from the periphery of the rear wall portion 44a. The retaining portion 45 has a lens retaining space P2 surrounded on three sides by the front wall portion 43a, the rear wall portion 44a, and the peripheral wall 44b. An inner edge portion 43b and an inner edge portion 44c are formed on the inner peripheral side of the front wall portion 43a and the rear wall portion 44a. The lens retaining space P2 is an annular groove portion (inner peripheral groove) opening toward the inner peripheral side between the inner edge portion 43b and the inner edge portion 44c.

On the inside the lens retaining space P2, a conductive member (not shown) is attached at a position along the rear wall portion 44a of the rear rim part 44. This conductive member has the same role as the conductive member 20 of the embodiment described above.

The dimming lens 40 is assembled, with the front rim part 43 and the rear rim part 44 separated. When the dimming lens 40 is assembled to the rear rim part 44 from the front, the rear surface (concave surface 41b side) of the periphery of the dimming lens 40 comes into contact with the rear wall portion 44a. Then, when the front rim part 43 is attached to the rear rim part 44 from the front and secured using screws or the like, the front surface (convex surface 41a side) of the periphery of the dimming lens 40 comes into contact with the front wall portion 43a. The position of the dimming lens 40 in the front-back direction is then determined by being sandwiched between the front and the rear by the front wall portion 43a and the rear wall portion 44a. In addition, the edge surface 41c is positioned against the peripheral wall 44b, and the position of the dimming lens 40 in the height direction and the horizontal direction is determined.

When the dimming lens 40 is assembled to the retaining portion 45, the terminal portion (not shown) located on the rear side of the dimming lens 40 comes into contact with a connector portion of the conductive member (not shown) in a conductive state. This makes it possible to supply electrical energy to the electrochromic element 42.

For the dimming lens 40, which is a convex meniscus lens, the shorter the distance from the eye point EP to the lens periphery, the thicker the edge thickness becomes. Thus, when the lens outer shape is ball-shaped to fit a non-circular frame, variations in the edge thickness may occur. And since the retaining portion 45 is structured to sandwich and retain the periphery of the dimming lens 40 between the front and the rear, it is necessary to manage the thickness of the dimming lens 40 in the front-back direction to fit between the front wall portion 43a and the rear wall portion 44a (inner dimensions of the retaining portion 45).

In the dimming lens 40, the terminal portion (the portion connecting to the conductive member) is provided on the rear side, and the positional reference of the portion in the front-back direction that fits into the lens retaining space P2 is managed on the rear side. Therefore, at the part where the edge thickness of the dimming lens 40 is larger than the inner dimensions of the retaining portion 45, the area including a part of the convex surface 41a on the front side becomes the interference area Q2 that overlaps with the front wall portion 43a of the front rim part 43 (which does not fit into the lens retaining space P2).

The thickness adjustment processing is performed to remove the interference area Q2 and adjust the shape of the periphery of the dimming lens 40. The flow of the thickness adjustment processing for the dimming lens 40 is the same as the flow of the thickness adjustment processing for the dimming lens 11 described earlier with reference to the flow chart shown in Fig. 6, and the details are omitted accordingly. The difference from the thickness adjustment processing for the dimming lens 11 is that in the case of the dimming lens 40, the target of the thickness adjustment processing in step S8 is not the concave surface 41b but the convex surface 41a.

As shown in Fig. 8, as a result of the thickness adjustment processing, the periphery of the dimming lens 40 is processed to have steps including a first surface 46 facing forward and a second surface 47 facing outward. The first surface 46 is a plane perpendicular to the front-back direction, and the periphery of the first surface 46 comes into connect with approximately the front edge of the edge surface 41c. The second surface 47 is a surface extending forward from the inner periphery of the first surface 46 and has a shape following an inner edge 43c of the front wall portion 43a of the front rim part 43. By performing the thickness adjustment processing on the dimming lens 40 as described above, the dimming lens 40 can be assembled to the retaining portion 45 without being restricted by the thickness of the lens periphery.

The above description is based on the illustrated embodiment. However, the present invention is not limited to the foregoing embodiment but can be modified and changed without departing from the gist of the invention.

The dimming lens 11 in the foregoing embodiment includes the convex surface 21a on the front side and the concave surface 21b on the rear side, wherein the electrochromic element 22 (including the terminal portion 23) is provided on the convex surface 21a side and the interference area Q and the interference area Q1 are removed by the processing performed on the concave surface 21b side. The dimming lens 40 includes the convex surface 41a on the front side and the concave surface 41b on the rear side, wherein the electrochromic element 42 is provided on the concave surface 41b side, and the interference area Q2 is removed by the processing performed on the convex surface 21a side. The present invention can be applied to lenses and processing in forms different from these.

For example, in the dimming lens 11, as with the dimming lens 40, the terminal portion can be disposed on the concave surface 21b side to perform the thickness adjustment processing (processing for removing the interference area) on the convex surface 21a side.

As another example, the present invention can be applied to the processing of a dimming lens having a structure in which an electrochromic element is placed (sandwiched) inside the lens in the thickness direction. The present invention is also applicable to this type of dimming lens because the terminal portion connecting to the electrochromic element can be placed on either the front or the rear of the lens and brought into contact with the conductive member 20 on the frame 12 side as in the illustrated embodiment. In other words, the present invention is not limited to the type in which the entire electronic element is disposed on one side of the dimming lens, but can be applied to any dimming lens in which the terminal portion connecting at least to the electronic element is disposed on one side.

In the foregoing embodiment, the electrochromic elements 22, 42 are applied as the electronic elements constituting the dimming lens 11 and the dimming lens 40, but the present invention can be applied to the processing of a dimming lens having electronic elements other than electrochromic elements. For example, electrophoretic elements and liquid crystal elements have in common with electrochromic elements in changing optical characteristics by supplying electrical energy. Therefore, the same effects can be achieved by applying the above-mentioned technology to the processing of dimming lenses for spectacles that use electrophoretic elements liquid crystal elements as the electronic elements. The term "dimming" in the present invention refers to the optical effects of such various electronic elements on optical elements in general, and is not limited to changes in light transmittance (light transmittance) or color in a narrow sense.

As described above, in the electronic dimming spectacles 10, when assembling the dimming lens 11 to the frame 12, the terminal portion 23 disposed on the dimming lens 11 side comes into contact with the connector portion 20d of the conductive member 20. Therefore, it is preferred that the front-back position of the dimming lens 11 with respect to the frame 12 be managed based on the front side of the dimming lens 11 (the side with the terminal portion 23). Here, the edge surface 21c of the lens 21 in the embodiment described above is a surface extending in the front-back direction. The edge surface 21c in this shape is suitable as the external shape of the dimming lens 11 in which the front-back position is managed on the front side because the contact between the edge surface 21c and the peripheral wall 15b of the front rim part 15 does not affect the positional accuracy of the dimming lens 11 in the front-back direction. However, a lens peripheral shape different from that of the edge surface 21c may be selected. The same is true for the dimming lens 40, and a lens peripheral shape different from the edge surface 41c may be selected. For example, the lens peripheral shape may be set as a tapered surface where its radial position changes in the front-back direction.

The configuration of the retaining portion in the frame is not limited to the retaining portions 17, 45 of the foregoing embodiment. For example, unlike the retaining portions 17, 45, a retaining portion with a U-shaped cross-sectional structure in which the peripheral walls 15b, 44b are curved may be used. In the retaining portion 17 of a modification shown in Fig. 7, the inclined surface 16e of the rear wall portion 16a is non-parallel to the rear surface of the front wall portion 15a, but a retaining portion with a V-shaped cross-sectional structure may be used in which the part where the lens periphery is sandwiched between the front and the rear gradually becomes wider towards the inner periphery by also making the rear side of the front wall portion 15a into an inclined surface 16e.

In the embodiment described above, the lenses 21, 41, which are optical elements, are made of resin, but they may be applied to lenses made of glass.

### [Industrial Applicability]

The application of the present invention makes it possible to easily assemble spectacle lenses to a frame without being restricted by the thickness of the lens periphery, the frame having a retaining portion that sandwiches retains the peripheries of the spectacle lenses between the front and the rear, thereby improving the productivity and design of electronic dimming spectacles and the like.

## Claims

1. A method of processing a spectacle lens that has an electronic element overlapping an optical element and supplies electric energy to the electronic element through a terminal portion located on a surface on one side in a front-back direction to produce a dimming effect, the method comprising:
acquiring inner dimension information of a retaining portion of a frame, the retaining portion sandwiching and retaining a periphery of the spectacle lens between a front and a rear;
acquiring thickness information of the periphery of the spectacle lens processed into an external shape corresponding to the frame;
determining an interference area of the periphery of the spectacle lens that does not fit into the retaining portion on the basis of the inner dimension information of the retaining portion and the thickness information of the periphery of the spectacle lens; and
performing thickness adjustment processing for removing the interference area, on the other side of the spectacle lens opposite to the surface on the one side of the spectacle lens.

2. The method of processing a spectacle lens according to claim 1, wherein the surface on the one side of the spectacle lens is a convex surface and the surface on the other side is a concave surface.

3. The method of processing a spectacle lens according to claim 1 or 2, wherein the thickness adjustment processing removes only a part of the spectacle lens in a radial direction that overlaps the retaining portion.

4. A program for processing a spectacle lens that has an electronic element overlapping an optical element and supplies electric energy to the electronic element through a terminal portion located on a surface on one side in a front-back direction to produce a dimming effect,
the program causing a control unit for controlling processing of the spectacle lens to:
acquire inner dimension information of a retaining portion of a frame, the retaining portion sandwiching and retaining a periphery of the spectacle lens between a front and a rear;
acquire thickness information of the periphery of the spectacle lens processed into an external shape corresponding to the frame;
determine an interference area of the periphery of the spectacle lens that does not fit into the retaining portion on the basis of the inner dimension information of the retaining portion and the thickness information of the periphery of the spectacle lens; and
perform thickness adjustment processing for removing the interference area, on a surface on the other side of the spectacle lens opposite to the surface on the one side of the spectacle lens.
